# FASCICULE DE BREVET EUROPEEN

(11) **EP 2 415 645 B1**
(45) Date de publication et mention de la délivrance du brevet: **19.11.2014**
(21) Numéro de dépôt: 11175682.1
(22) Date de dépôt: 28.07.2011
(51) Int. Cl.: B60S 1/38, B60S 1/52

(54) **Balai d'essuie-glace**
Scheibenwischerarm
Windscreen-wiper blade

(30) Priorité: 05.08.2010 FR 1003278
(43) Date de publication de la demande: 08.02.2012
(73) Titulaire: Valeo Systèmes d'Essuyage, 78321 Le Mesnil Saint Denis (FR)
(72) Inventeur: Espinasse, Philippe, 63114 Coudes (FR); Ollier, Nicolas, 43700 Arsac en Velay (FR)
(74) Mandataire: Léveillé, Christophe

(56) Documents cités:
- EP-A1- 1 574 410
- DE-A1-102006 020 524
- FR-A1- 2 923 785
- US-A1- 2007 174 989
- US-B1- 7 540 061

## Description

L'invention concerne un balai d'essuie-glace.

Elle se rapporte en particulier à un balai d'essuie-glace de type balai plat comportant une monture de support d'orientation principale longitudinale, la monture comportant des crochets longitudinaux qui délimitent un logement inférieur ouvert vers le bas destiné à recevoir un talon supérieur de montage d'une lame d'essuyage et qui portent chacun une ailette latérale.

Le document de brevet WO2009/118286 décrit un balai d'essuie-glace comportant une monture de support d'orientation principale longitudinale et une lame d'essuyage qui est portée par la monture. La monture comporte un corps tubulaire supérieur contenant une vertèbre de rigidification et des crochets longitudinaux qui délimitent un logement inférieur ouvert vers le bas qui reçoit un talon supérieur de montage de la lame d'essuyage. La lame comporte également une lèvre inférieure d'essuyage qui est apte à venir en contact avec un panneau vitré à essuyer.

Sur lesdits crochets longitudinaux sont agencées deux allettes latérales horizontales d'orientation longitudinale. Ces ailettes latérales horizontales permettent la fixation d'un déflecteur aérodynamique, par emboîtement de ces ailettes dans des rainures correspondantes portées par le déflecteur.

Selon un exemple possible d'assemblage, le déflecteur est assemblé sur la monture par introduction mutuelle de leur extrémité et coulissement des deux pièces.

L'invention concerne la fixation d'un déflecteur sur une structure de balai d'essuie-glace de ce type.

FR-A-2923785 montre le préambule de la revendication 1.

Plus particulièrement, l'objet de l'invention est d'augmenter la tenue en traction, en effort latéral et en couple de torsion entre les différents éléments, notamment entre la structure du balai et le déflecteur d'un tel balai d'essuie-glace tout en maintenant la flexibilité nécessaire au bon fonctionnement du balai.

L'invention résout ce problème technique et propose un balai d'essuie-glace comportant une monture de support d'orientation principale longitudinale, la monture comportant des crochets longitudinaux qui délimitent un logement inférieur ouvert vers le bas destiné à recevoir un talon supérieur de montage de d'une lame d'essuyage et qui portent chacun une ailette latérale destinée à la fixation d'un déflecteur, chaque dite ailette comportant un harpon de fixation coopérant avec un harpon complémentaire agencé sur une branche horizontale dudit déflecteur.

La fixation par harpons de forme complémentaire assure un montage quasi-indémontable à l'arrachement.

Un tel agencement permet de limiter le nombre de parois verticales et horizontales du déflecteur, dont la fixation est réalisée uniquement par deux branches horizontale. La flexibilité du balai s'en trouve conservée voir augmentée selon le matériau utilisé.

Le montage du support et du déflecteur s'effectue, par exemple, par clippage des harpons à l'extrémité de ces deux pièces, puis coulissement mutuel, et est facilité.

Selon un mode de réalisation préféré, ledit harpon de fixation est conformé sur la face supérieure de chaque dite ailette.

Avantageusement, ledit harpon de fixation est conformé à l'extrémité libre de chaque dite ailette.

Ledit harpon de fixation peut présenter une surface d'accroche inclinée d'un angle α par rapport à un plan vertical.

Plus particulièrement, ledit harpon de fixation présente une surface d'accroche inclinée d'un angle α compris entre 0 et 45° par rapport à un plan vertical.

De préférence, ledit harpon de fixation présente une surface d'accroche inclinée d'un angle α égal à 20° par rapport à un plan vertical.

Selon l'invention, ledit déflecteur est bi-matière et lesdites branches du déflecteur sont en matériau thermoplastique, matière plus rigide que celle du corps du déflecteur et du support, afin d'assurer la solidité de la tenue d'accrochage.

Ladite monture comporte avantageusement un corps tubulaire supérieur destiné à contenir une vertèbre de rigidification.

L'invention est décrite ci-après plus en détail en référence aux figures qui ne représentent qu'un mode de réalisation préféré de l'invention.

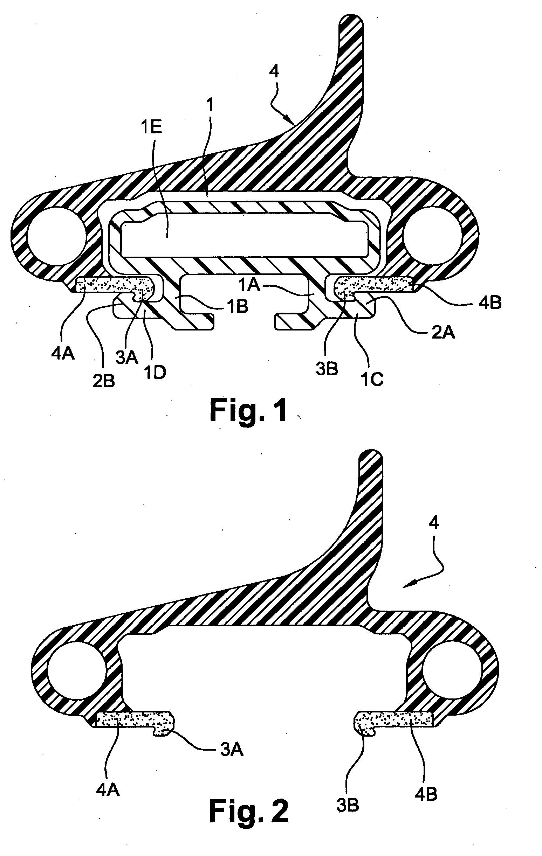

La figure 1 est une vue en coupe transversale d'un balai d'essuie-glace conforme à l'invention.
La figure 2 est une vue en coupe transversale d'un déflecteur conforme à invention.

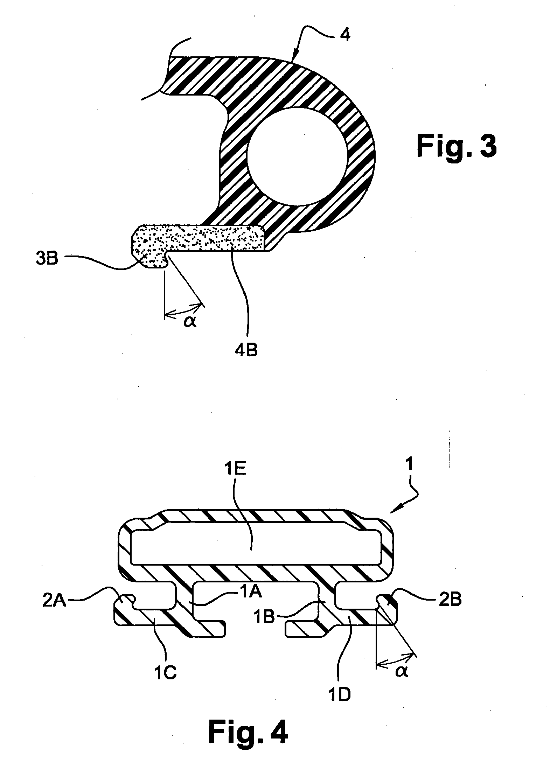

La figure 3 est une vue de détail en coupe transversale d'un déflecteur conforme à l'invention.
La figure 4 est une vue en coupe transversale d'un support conforme à l'invention.

Un balai d'essuie-glace conforme à l'invention comporte une monture de support 1 d'orientation principale longitudinale, la monture comportant des crochets longitudinaux 1A, AB qui délimitent un logement inférieur ouvert vers le bas destiné à recevoir un talon supérieur de montage d'une lame d'essuyage et qui portent chacun une ailette latérale 1C, 1D. Elle comporte également un corps tubulaire supérieur 1E destiné à contenir une vertèbre de rigidification, en forme de lame plate d'orientation longitudinale.

Chaque ailette 1C, 1D comporte un harpon de fixation 2A, 2C coopérant avec un harpon complémentaire 3A, 3C agencé sur une branche 4A, 4B du déflecteur 4.

Ce harpon de fixation 2A, 2C est conformé sur la face supérieure de chaque ailette 1C, 1D, à l'extrémité libre de celle-ci.

Le harpon de fixation 1C, 1D présente une surface d'accroche inclinée d'un angle & par rapport à un plan vertical, de préférence l'angle & est compris entre 0 et 45° par rapport à un plan vertical et, de préférence, égal à 20° par rapport à un plan vertical.

La longueur des branches 4A, 4C du déflecteur sont déterminées de façon à assurer un contact avec les harpons 2A, 2B du support, sans tension susceptible de déformer le support ou le déflecteur.

Le déflecteur est bi-matière, les branches 4A, 4B du déflecteur étant de préférence en matériau thermoplastique, par exemple en polypropylène, alors que le corps du déflecteur 4 est en matière souple de type élastomère.

## Revendications

1. Balai d'essuie-glace comportant une monture de support (1) d'orientation principale longitudinale, la monture (1) comportant des crochets longitudinaux (1A, 1B) qui délimitent un logement inférieur ouvert vers le bas destiné à recevoir un talon supérieur de montage d'une lame d'essuyage et qui portent chacun une ailette latérale (1C, 1D) destinée à la fixation d'un déflecteur (4), chaque dite ailette comportant un harpon de fixation (2A, 2B) coopérant avec un harpon complémentaire (3A, 3B) agencé sur une branche (4A, 4B) dudit déflecteur, **caractérisé en ce que** ledit déflecteur (4) est bi-matière et **en ce que** lesdites branches (4A, 4B) du déflecteur sont en matériau thermoplastique, lesdites branches (4A, 4B) dudit déflecteur étant en matière plus rigide que celle du corps du déflecteur et de la monture de support (1).

2. Balai selon la revendication précédente, **caractérisé en ce que** ledit harpon de fixation (2A, 2B) est conformé sur la face supérieure de chaque dite ailette (1C, 1D).

3. Balai selon la revendication 1 ou 2, **caractérisé en ce que** ledit harpon de fixation (2A, 2B) est conformé à l'extrémité libre de chaque dite ailette (1C, 1D).

4. Balai selon une des revendications précédentes, **caractérisé en ce que** ledit harpon de fixation (2A, 2B) présente une surface d'accroche incliné par rapport à un plan vertical

5. Balai selon la revendication précédente, **caractérisé en ce que** ledit harpon de fixation (2A, 2B) présente une surface d'accroche incliné d'un angle compris entre 0 et 45° par rapport à un plan vertical.

6. Balai selon la revendication précédente, **caractérisé en ce que** ledit harpon de fixation (2A, 2B) présente une surface d'accroche inclinée d'un angle égal à 20° par rapport à un plan vertical.

7. Balai selon une des revendications précédentes, **caractérisé en ce que** ladite monture (1) comporte un corps tubulaire supérieur (1E) destiné à contenir une nervure de renforcement.

## Patentansprüche

1. Scheibenwischerblatt, umfassend ein Stützgestell (1) mit einer Hauptausrichtung in Längsrichtung, wobei das Gestell (1) Längshaken (1A, 1B) umfasst, die eine untere, nach unten offene Aufnahme definieren, die zur Aufnahme einer oberen Montageklaue einer Wischleiste bestimmt ist, und die jeweils eine seitliche Finne (1C, 1D) tragen, die zur Befestigung eines Abweisers (4) bestimmt ist, wobei jede Finne eine Befestigungsharpunenklammer (2A, 2B) umfasst, die mit einer komplementären Harpunenklammer (3A, 3B) zusammenwirkt, die an einem Arm (4A, 4B) des Abweisers angebracht ist, **dadurch gekennzeichnet, dass** der Abweiser (4) aus zwei verschiedenen Materialien besteht und dass die Arme (4A, 4B) des Abweisers aus thermoplastischem Material sind, wobei das Material der Arme (4A, 4B) des Abweisers steifer als das des Körpers des Abweisers und des Stützgestells (1) ist.

2. Wischerblatt nach dem vorhergehenden Anspruch, **dadurch gekennzeichnet, dass** die Befestigungsharpunenklammer (2A, 2B) an die obere Fläche jeder Finne (1C, 1D) angepasst ist.

3. Wischerblatt nach Anspruch 1 oder 2, **dadurch gekennzeichnet, dass** die Befestigungsharpunenklammer (2A, 2B) an das freie Ende jeder Finne (1C, 1D) angepasst ist.

4. Wischerblatt nach einem der vorhergehenden Ansprüche, **dadurch gekennzeichnet, dass** die Befestigungsharpunenklammer (2A, 2B) eine bezüglich einer Vertikalebene geneigte Aufsetzfläche aufweist.

5. Wischerblatt nach dem vorhergehenden Anspruch, **dadurch gekennzeichnet, dass** die Befestigungsharpunenklammer (2A, 2B) eine bezüglich einer Vertikalebene in einem Winkel von 0 bis 45° geneigte Aufsetzfläche aufweist.

6. Wischerblatt nach dem vorhergehenden Anspruch, **dadurch gekennzeichnet, dass** die Befestigungsharpunenklammer (2A, 2B) eine bezüglich einer Vertikalebene in einem Winkel von 20° geneigte Aufsetzfläche aufweist.

7. Wischerblatt nach einem der vorhergehenden Ansprüche, **dadurch gekennzeichnet, dass** das Gestell (1) einen oberen röhrenförmigen Körper (1E) umfasst, der dazu bestimmt ist, eine Verstärkungsrippe zu enthalten.

## Claims

1. Windscreen-wiper arm comprising a principally longitudinally oriented support frame (1) comprising longitudinal hooks (1A, 1B) that delimit a lower recess, which is open in the downward direction and is designed to receive an upper mounting heel of a wiper blade, and that each bear a lateral wing (1C, 1D) designed for the attachment of a deflector (4), each of said wings comprising an attachment tab (2A, 2B) engaging with a complementary tab (3A, 3B) arranged on a branch (4A, 4B) of said deflector, **characterized in that** said deflector (4) is made of two materials and **in that** said branches (4A, 4B) of the deflector are made of thermoplastic material, said branches (4A, 4B) of the deflector being made of a material that is more rigid than that of the body of the deflector and of the support frame (1).

2. Arm according to the preceding claim, **characterized in that** said attachment tab (2A, 2B) is formed on the upper face of each of said wings (1C, 1D).

3. Arm according to Claim 1 or 2, **characterized in that** said attachment tab (2A, 2B) is formed at the free end of each of said wings (1C, 1D).

4. Arm according to one of the preceding claims, **characterized in that** said attachment tab (2A, 2B) has a latching surface which is inclined with respect to a vertical plane.

5. Arm according to the preceding claim, **characterized in that** said attachment tab (2A, 2B) has a latching surface which is inclined by an angle between 0 and 45° with respect to a vertical plane.

6. Arm according to the preceding claim, **characterized in that** said attachment tab (2A, 2B) has a latching surface which is inclined by an angle equal to 20° with respect to a vertical plane.

7. Arm according to one of the preceding claims, **characterized in that** said frame (1) comprises an upper tubular body (1E) designed to contain a reinforcing rib.
